# EUROPEAN PATENT APPLICATION

(11) **EP 3 376 707 A1**
(43) Date of publication of application: **19.09.2018**
(21) Application number: 16864065.4
(22) Date of filing: 31.10.2016
(51) Int. Cl.: H04L 9/10, G06F 21/60

(54) **FILE TRANSMITTING AND RECEIVING SYSTEM**

(30) Priority: 11.11.2015 JP 2015220925
(71) Applicant: Takano Naoto, Chiba-shi, Chiba 262-0019 (JP)
(72) Inventor: Takano Naoto, Chiba-shi, Chiba 262-0019 (JP)
(74) Representative: Gill Jennings & Every LLP
(86) International application number: PCT/JP2016/082283
(87) International publication number: WO 2017/082102

(57) **Abstract**

The present invention addresses the problem of realizing a tamper-proof and intrusion-proof file transmitting and receiving means between an Internet of Things (IoT) device and a server. A file transmitting and receiving system comprises a server configured to encrypt a file addressed to a data processing apparatus and transmit the encrypted file to a network, a network connection terminal configured to receive the file from the network, a two-port storage apparatus having two I/O ports and the data processing apparatus, wherein the only function of a first I/O port of the two-port storage apparatus is to write data from the network connection terminal to the two-port storage apparatus, the only functions of a second I/O port are to decrypt the data written to the two-port storage apparatus and to cause the decrypted data to be read by the data processing apparatus, or to delete unnecessary files, and the functions of the two I/O ports are determined by hardware or firmware built into or coupled directly to the two-port storage apparatus.

## Description

### Technical Field

The present invention relates to a system for transmitting and receiving files through a network while ensuring security.

### Background Art

Internet of Things (IoT) era has arrived in which not only information devices but also objects that were just "things" are connected to the Internet. Home electric appliances are already beginning to be connected to the Internet.

Regarding this situation, security is an important issue, since objects connected to the Internet, hereinafter referred to as IoT devices, may be intruded by hackers, and the functions thereof may be deteriorated or private information may be leaked. The techniques related to security of IoT devices will be described below.

Recently, "connected car", which can be considered as a typical example of an loT device, is attracting attention in connection with automatic vehicle operation, and "Non-Patent Literature 3" in a research report from a member of the United States Senate discloses a case in which a vehicle connected to the Internet has been intruded and controlled from a remote location against the driver's will.

If a vehicle-mounted controller and an external network are directly connected, it is not easy to protect software of the vehicle-mounted controller. An intruder from the external network attacks the software for vehicle control, deteriorating control, stealing information and infecting the controller with viruses. There are demands to eliminate such vulnerability of software of the vehicle-mounted controller. However, from experience regarding personal computers and other systems, intrusion through the Internet cannot be easily prevented by applying security patches to software.

Personal computers adopt firewalls and security software such as antivirus software as security measures. The advantage of a software is that it can be changed easily, but meanwhile, this may be a drawback from the viewpoint of security. In the field of security, a superior method defeats other methods, and as a result, new methods of attack and new methods of preventing attack are developed one after another; this state is hereinafter referred to as a "game of cat and mouse".

However, especially in the case of motor vehicles, security is directly related to human lives, such that a complete security that puts an end to the "game of cat and mouse" is required, and even further, the system must be protected by a means that clearly has no fear of being breached. These problems related to security are not only restricted to motor vehicles, and the problems are common to many loT devices.

It is determined that motor vehicles can be inspected and maintained using connection terminals of in-vehicle network constituting the vehicle-mounted controller, but currently, the terminal is generally not connected to the Internet since the above-described intrusion may occur if connected to the Internet.

Along with the advancement of automatic vehicle operation technique, needs for an automatic vehicle operation from remote locations are expected, and studies are performed to connect the vehicle-mounted controller to the Internet in some way. There are also strong demands for realizing inspection and updating control software from remote locations.

One method for connecting the vehicle-mounted controller to the Internet while ensuring safety is to encrypt the information transmitted in the vehicle-mounted controller by hardware, for example (refer to Non-Patent Literature 1).

Further, a technique for preventing signals from being analyzed by using firewalls and authentication is also published (refer to Patent Literature 2).

However, these techniques are a trade-off with the convenience related to the operation of monitoring and updating the control software of the motor vehicle, and if frequent update must be performed similar to the case of personal computers, they are not considered the most preferable methods considering the actual method of use of control software of the motor vehicle.

Some experts say that "there is no specific remedy for security, and sufficient reflection of the advanced techniques that have already been acquired is most important". In addition to countermeasures taken at terminal apparatuses, countermeasures to be taken in servers or cloud systems of companies that are connected to the network are studied.

Countermeasures to be adopted in the loT device include device authentication, firewall, device lockdown, secure boot and obfuscation, and countermeasures to be adopted in the server include private cloud, VPN (Virtual Private Network), DPI (detailed monitoring and analyzing of communication contents), signature verification, access control, IDS (Intrusion Detection System) / IPS (Intrusion Prevention System), application sandbox, code signing certificate, route certificate, code protection and encryption.

The problem of fraudulence to the motor vehicle itself is not discussed, since it should be considered as a problem that must be solved by other means. The background art related to the security of motor vehicles is considered as follows, and the problem to be solved is summarized.
1. Use of authentication.
2. Use of firewall.
   Further, in order to prevent information communicated inside the vehicle-mounted controller from being analyzed, the following countermeasure must be adopted.
3. Encryption of data using hardware.
4. Obfuscation.

A vehicle-mounted network is currently disclosed to the public, so it can be said that there are attempts to prevent contents of communication between elements constituting the vehicle-mounted controller from being decrypted or fake communication from being performed, assuming that unauthorized intrusion to the vehicle-mounted controller network could not be prevented.

However, countermeasures using software to prevent illegal intrusion to the vehicle-mounted controller, such as wiretapping and virus infection, cannot put an end to the game of cat and mouse. Methods that are less vulnerable to unauthorized intrusion, such as encrypted communication of hardware and authentication within the vehicle-mounted controller, are considered, but such methods are advanced and complicated, and normal use of the system will be deteriorated.

Therefore, it is considered best to shutoff intrusion from the network to the vehicle-mounted controller itself, and to transfer information through the network between the vehicle-mounted controller and the server cooperating with the vehicle-mounted controller without being subjected to wiretapping and tampering.

Especially, since safety of motor vehicles are directly related to human lives, it is very important to protect the system by means that clearly has no fear of being intruded.

According to Non-Patent Literature 2, a technique is realized where hardware having an automatic encryption and decryption function is assembled to a hard disk for protection of security of personal computers, and Patent Literature 1 discloses a technique of completely protecting file tampering and virus infection of computers using a two-port storage apparatus, in other words, a two-head disk, that adopts the concept of offline.

### Citation List

### Patent Literature

PTL 1: Japanese Laid-Open Patent Publication No. 2002-140171
PTL 2: Japanese Laid-Open Patent Publication No. 2014-165641

### Non Patent Literature

NPL 1: Nikkei Technology Online, "Toyota Works Seriously on Countermeasures Against Hacking; Sets "Design Guideline" with Fujitsu", [Online], 2015/4/10 6:00 April 10, 2015, Nihon Keizai Shimbun, [Searched October 4, 2015], Internet <http://www.nikkei.com/article/DGXMZO85475460Z00C15A4000000/>
NPL 2: Lenovo Japan Support Page, "Answers to Frequently Asked Questions regarding Hard Disk Drive corresponding to Full Disk Encryption", [Online], June 23, 2014, Lenovo Japan, [Searched November 4, 2015], Internet <https://support.lenovo.com/jp/ja/documents/migr-69621 >
NPL 3: AFP = Current Events, ""Connected Cars"; Most are Vulnerable to Hacker Intrusion; US Report", [Online], February 10, 2015, MSN News, [Searched November 4, 2015], Internet <http://www.msn.com/ja-jp/news/techandscience/%E3%80%8C%E3%82%B3%E3%83%8D%E3%82%AF%E3 %83%86%E3%82%A3%E3%83%83%E3%83%89%E3%83%BB%E3%82%AB%E3% 83%BC%E3%80%8D%E5%A4%A7%E5%8D%8A%E3%81%AB%E3%83%8F%E3% 83%83%E3%82%AB%E3%83%BC%E4%BE%B5%E5%85%A5%E3%81%AE%E6% 81%90%E3%82%8C-%E7%B1%B3%E5%A0%B1%E5%91%8A%E6%9B%B8/ar-AA9bWzu>

### Summary of Invention

### Technical Problem

Various methods have been studied to ensure security of IoT devices, but the most preferable countermeasure is to infallibly prevent unauthorized intrusion itself from the Internet to the IoT device.

The technical problem to be solved by the present invention is to realize a tamper-proof and intrusion-proof file transmitting and receiving means for communicating data between the IoT device and a server cooperating with the IoT device through a network in a simple and secure manner.

### Solution to Problem

We will describe the means adopted by the present invention for solving the problems in paragraphs [0014] through [0025], and we will show that these means have the effect of solving the problems in paragraphs [0026] through [0047].

The file transmitting and receiving system according to claim 1 is based on the following idea.

Data is decrypted using hardware as disclosed in NPL 2, such that the decryption function will never be tampered.

Encrypted information is transmitted and received either offline or by a method that can be assumed as offline as disclosed in PTL 1, such that intrusion to the IoT device is disabled.

In the file transmitting and receiving system according to claim 1, the server of claim 1 (hereinafter simply referred to as server) is connected to the network of claim 1 (hereinafter simply referred to as network). The server encrypts the file addressed to the data processing apparatus of claim 1 (hereinafter simply referred to as data processing apparatus), and transmits the file to the network.

In the file transmitting and receiving system according to claim 1, the network is connected to the network connection terminal of claim 1 (hereinafter simply referred to as network connection terminal). The network connection terminal receives the encrypted file addressed to the data processing apparatus from the network.

A two-port storage apparatus has two I/O ports, wherein a first I/O port A is connected to the network connection terminal, and a second I/O port B is connected to the data processing apparatus, through which the network connection terminal and the data processing apparatus are relayed.

The network connection terminal writes the received encrypted file addressed to the data processing apparatus to the two-port storage apparatus using the first I/O port A of the two-port storage apparatus. The only function of I/O port A is to additionally write data from the network connection terminal to the two-port storage apparatus, and its function is restricted by hardware or firmware built into or coupled directly to the two-port storage apparatus.

The data processing apparatus receives a result of decryption of the encrypted file from the two-port storage apparatus using the second I/O port B of the two-port storage apparatus.

The only functions of the I/O port B are to read data from the two-port storage apparatus, decrypt the code and transfer the decrypted data to the data processing apparatus, and to delete unnecessary files, wherein the functions of the I/O port B are restricted by hardware built into or coupled directly to the two-port storage apparatus.

The data processing apparatus performs predetermined processes using the received encrypted file having been decrypted. If the IoT device is connected to the data processing apparatus, the IoT device is connected to the network through the file transmitting and receiving system of claim 1.

According to the file transmitting and receiving system of claim 2, an installation position of the decryption function in the file transmitting and receiving system of claim 1 is moved from I/O port B to I/O port A.

The only function of the I/O port A of claim 2 is to decrypt the code after receiving data from the network connection terminal and write the data in the two-port storage apparatus, and its function is restricted by hardware or firmware built into or coupled directly to the two-port storage apparatus.

The function of I/O port B of claim 2 is to read/write data from the data processing apparatus to two-port storage apparatus.

The function of the file transmitting and receiving system of claim 2 as a whole is the same as the file transmitting and receiving system of claim 1.

The file transmitting and receiving system according to claim 3 includes a second partition in the two-port storage apparatus, or a second two-port storage apparatus, in addition to the file transmitting and receiving system of data according to claim 1 or claim 2.

The file transmitting and receiving system according to claim 3 can use the second two-port storage apparatus corresponding to [0022] through [0024], instead of the second partition of the two-port storage apparatus.

The file transmitting and receiving system according to claim 3 can write data into the second partition using the I/O port B. Further, the file transmitting and receiving system according to claim 3 can write data to the second partition using the I/O port B after encrypting data using software that the file transmitting and receiving system has. The I/O port B can perform read and write when accessing the second partition.

The network connection terminal can read the information from the second partition using I/O port A. The I/O port A has a read only function when accessing the second partition.

The functional restriction of the I/O port A restricted to read only function when accessing the second partition is realized by hardware or firmware built into or coupled directly to the two-port storage apparatus, instead of by software.

The network connection terminal reads the encrypted data from the second partition of the two-port storage apparatus and transmits the data to the server, and the server decrypts the code and recognizes the content.

According to the file transmitting and receiving system of claim 4, the network connection terminal is a personal computer, a smartphone or a webserver, and the file transmitting and receiving system according to claim 3 is adopted in the personal computer, the smartphone or the webserver to realize enhanced security.

### Advantageous Effects of Invention

The effect of encryption among the methods constituting the invention of claim 1 will be described.

In the file transmitting and receiving system of claim 1, the server encrypts the file to be transmitted to the data processing apparatus, and transmits the encrypted file to the network. If the file is encrypted and transmitted, the file will not be decrypted or tampered in the network if the encryption key is not available from the network, and the contents of the file can be concealed and protected from tampering.

According to the file transmitting and receiving system of claim 1, the data processing apparatus decrypts the file transmitted from a manufacturer or an administrator or an operator of the file transmitting and receiving system, and there is no need to decrypt files transmitted from an unspecified person, such that communication can be established if the server and the I/O port B have the same encryption key.

The network connection terminal receives the encrypted file, and uses the first I/O port A connected to the two-port storage apparatus to write the data to the two-port storage apparatus.

Even if a hacker without authorization intrudes to the network connection terminal from the network and attempts to decrypt the encrypted file before being written to the two-port storage apparatus, he/she cannot decrypt or tamper with the encrypted file without the encryption key. The only thing that the hacker can do is to interfere with the writing of data of the encrypted file, and such interference is also possible in the network.

The effect of an additional write only port of the method constituting the invention of claim 1 will be described. Even if the hacker causes the two-port storage apparatus to be infected with a virus file, the function of the I/O port A is restricted to additional write only by hardware or firmware built into or coupled directly to the two-port storage apparatus, instead of by software, such that the functional restriction will not be altered regardless of the type of data handled by the I/O port A, and since the I/O port A cannot perform operations other than additional write, the virus file will not be read or used.

If there is no readable/writable storage in the network connection terminal, it has the same effect as having virus infection completely prevented, and even if some type of unauthorized function is formed in a memory of this terminal and unauthorized operation is performed, such unauthorized function will disappear by rebooting the network connection terminal.

The data processing apparatus uses I/O port B connected to the two-port storage apparatus to access the encrypted file written in the two-port storage apparatus.

We will now describe the effect of offline of the method constituting the invention of claim 1.

The file transmitting and receiving system of claim 1 adopts a configuration in which the data that the network connection terminal writes to a storage using I/O port A is read by a data processing apparatus, that is independent from the network connection terminal having written the data, using I/O port B, that is different from the port connected to the network connection terminal, such that there is no circuit directly transmitting data between the network connection terminal and the data processing apparatus, and they are in an offline relationship. Especially if the two-port storage apparatus is a two-head disk (refer to Patent Literature 1), they are physically offline, and even if it is not, they can be regarded as offline.

Since there is no path that reaches the data processing apparatus from the network without passing the two-port storage apparatus, it is impossible to intrude to the data processing apparatus from the network connection terminal, infect the OS of the apparatus with a virus, or form a backdoor thereto.

Countermeasures using firewalls and security software such as antivirus software merely lead to a "game of cat and mouse", but the "offline" protection function regarding the data processing apparatus is the effect realized by hardware structure, and it will not lead to a "game of cat and mouse".

Among the methods constituting the invention of claim 1, we will describe the effect of a decryption hardware.

The I/O port B reads the encrypted file from the two-port storage apparatus, decrypts the file, and then transfers the same to the data processing apparatus.

The I/O port B has its functions restricted to reading data from the two-port storage apparatus, decrypting data and transferring the same to the data processing apparatus, and to deleting unnecessary files.

This functional restriction is realized not by software but by hardware or firmware either built into or directly connected to the two-port storage apparatus, such that functional restriction will not be changed regardless of the type of data communicated by the I/O port B, and the I/O port B will not perform operations other than the determined decryption operation. All files other than those encrypted correctly will be invalidated.

Since there is no path that reaches the data processing apparatus from the network without passing the I/O port B in an offline state, hackers cannot intrude to and control the data processing apparatus of the file transmitting and receiving system according to the present invention, cannot infect the OS with a virus, cannot form a backdoor thereto, and cannot decrypt or tamper with the encrypted file.

Only the correctly encrypted file will be decrypted, passed through the two-port storage apparatus to reach the data processing apparatus, and contents of the file can be utilized by the IoT device connected to the data processing apparatus.

If the network connection terminal of the file transmitting and receiving system according to claim 1 does not have a readable/writable storage, hackers cannot infect the network connection terminal with a virus.

The security of the file transmitting and receiving system according to claim 1 utilizes the fact that hardware cannot be altered, and therefore, hackers cannot write any data, such as a command to "change the functions of I/O port A and I/O port B" to the two-port storage apparatus, such that the "game of cat and mouse" will not be caused. The problems described in [0005] are solved, since the system clearly has no fear of being breached.

Since the file transmitting and receiving system according to claim 2 differs from claim 1 in that the decryption function of the file transmitting and receiving system is moved from I/O port B to I/O port A, such that the file transmitting and receiving system of claim 2 has the same security effect as the file transmitting and receiving system of claim 1 described in [0026] to [0035].

The file transmitting and receiving system of claim 3 includes, in addition to the file transmitting and receiving system of data described in claims 1 or 2, a second two-port storage apparatus or a second partition in the two-port storage apparatus.

According to the file transmitting and receiving system of claim 3, information stored in the system can be written into the second partition through the I/O port B. This is because I/O port B is readable/writable when accessing the second partition.

According to the file transmitting and receiving system of claim 3, the information stored in the system can be encrypted safely. That is, as described in [0033], there is no path that reaches the data processing apparatus according to claims 1 or 2 without passing the I/O port B, so that hackers cannot intrude and control the data processing apparatus of the present file transmitting and receiving system, cannot infect the OS with a virus, cannot provide a backdoor, and cannot decrypt or tamper with the encrypted file, and since only the content of a correctly encrypted file reaches the data processing apparatus, the data processing apparatus will be maintained in a clean state.

The network connection terminal according to claim 3 can read this information from the second partition using the I/O port A. This is because the I/O port A has a read only function when accessing the second partition.

The effect of this read only port will be described.

The functional restriction of the I/O port A performing read only when accessing the second partition is realized not only by software but by hardware or firmware built into or directly connected to the two-port storage apparatus, such that the functional restriction will not be altered, regardless of the type of data being communicated through the I/O port A, and the I/O port A cannot perform operations other than data read, such that an unauthorized intruder to the network connection terminal cannot infect the second partition of the two-port storage apparatus with a virus.

According to the data processing apparatus of claim 3, the second partition can be read using the I/O port B, but safety is realized since only the data processing apparatus itself can write data to the second partition, as described in [0039] and [0041].

We will now describe software update of the network connection terminal.

According to the file transmitting and receiving system of claim 3, the server can send the software used in the network connection terminal safely to the second partition of the two-port storage apparatus.

Similar to the file for the data processing apparatus, by encrypting software to be used by the network connection terminal and transmitting the same to the data processing apparatus, and thereafter, transferring the software to the second partition by the data processing apparatus, the software can be used from the network connection terminal.

The file transmitting and receiving system according to claim 3 can utilize a second two-port storage apparatus, instead of the second partition of the two-port storage apparatus described in [0038], [0040], [0041] and [0042].

The network connection terminal according to claim 3 reads the encrypted data from the second partition of the two-port storage apparatus and transmits the same to the server, by which the server can decrypt the code and read the data, such that bidirectional communication is realized, only not in real-time.

According to the file transmitting and receiving system of claim 4, smartphone security can be reinforced. If personal information and address books are stored in a storage belonging to the first partition or the data processing apparatus, it will be concealed and will not be stolen.

Further, by providing a call function, a navigation function and a wearable device processing function to the data processing apparatus, and storing the software and data in a storage belonging to the first partition or the data processing apparatus, they will be completely intrusion-proof from the network, and can be concealed. Even further, the software and data in the first partition can be updated by a provider sharing the encryption key.

Further, as described in [0038] through [0043], data generated by the data processing apparatus can be sent to the server 3 safely.

According to the file transmitting and receiving system of claim 5, security of the personal computer can be reinforced. If the OS, important software and important contents of the personal computer are stored in the second partition, as described in the previous claim, the data can be used from the personal computer, and it cannot be intruded from the network, such that the personal computer will not be infected with a virus or tampered. These data can be updated by a provider sharing the encryption key using a server.

According to the file transmitting and receiving system of claim 6, the webserver security can be reinforced. As illustrated in [0043], the contents for the webserver can be received from the server safely. If the contents are transferred to the second partition and made pubic using the I/O port A of the two-port storage apparatus, they will not be tampered through unauthorized intrusion from the network.

### Brief Description of Drawings

FIG. 1 is a view illustrating a file transmitting and receiving system.
FIG. 2 is a view illustrating an operation principle.
FIG. 3 is a view illustrating an operation principle.
FIG. 4 is a view having applied the system to a wearable device.
FIG. 5 is a view having applied the system to a personal computer or a smartphone.
FIG. 6 is a view having applied the system to a webserver.
FIG. 7 is a view having applied the system to a navigation.
FIG. 8 is a view having applied the system to an IoT device.
FIG. 9 is a view illustrating a file transmitting and receiving system equipped with a second two-port storage apparatus.

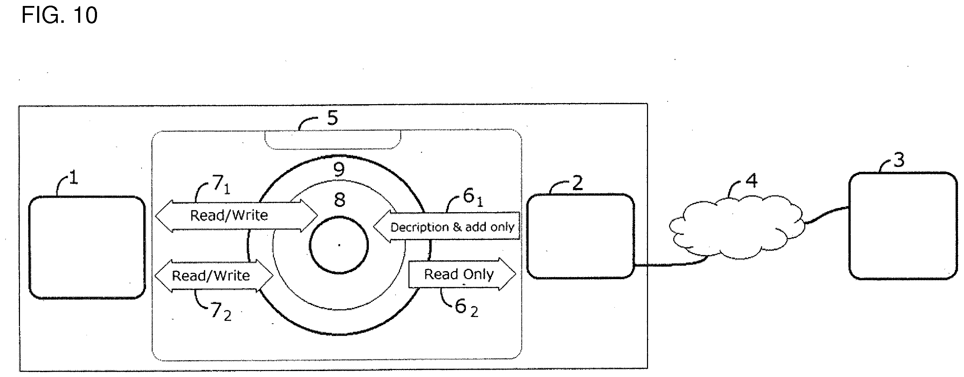

FIG. 10 is a view of the file transmitting and receiving system in which a decryption function is moved from I/O port B to I/O port A.

### Description of Embodiments

### (First Embodiment)

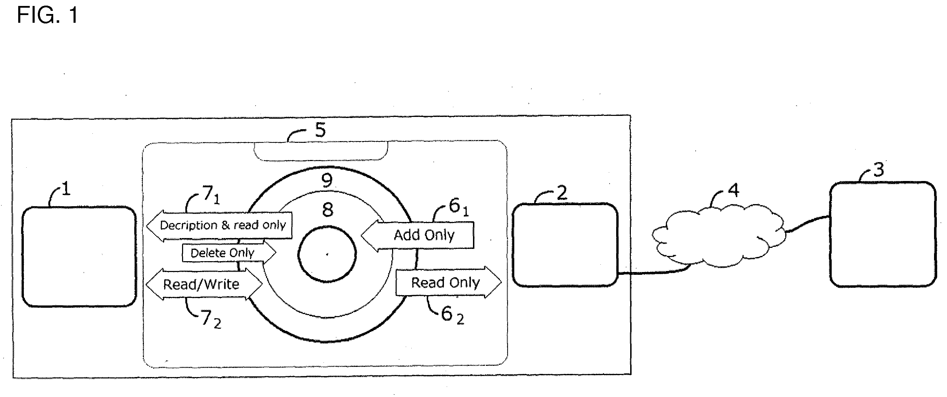

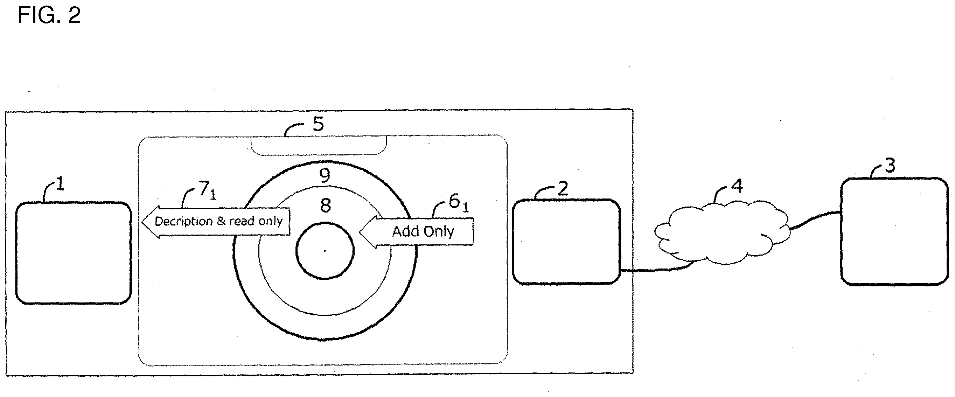

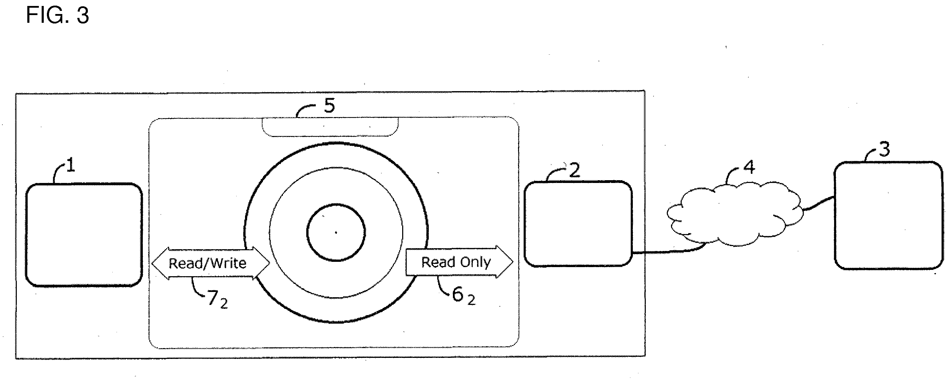

A file transmitting and receiving system according to FIG. 1 applied to a vehicle-mounted control system of a motor vehicle will be described with reference to FIGs. 2 and 3. A vehicle-mounted controller of a motor vehicle is connected to a data processing apparatus 1, and operates in cooperation with the data processing apparatus 1.

In order for a motor vehicle manufacturer to write a maintenance file into the vehicle-mounted controller of the manufactured motor vehicle, the manufacturer encrypts the maintenance file using an encryption key set by a server 3 in its own company, as illustrated in FIG. 2, and transmits the file to a network 4. A network connection terminal 2 writes the encrypted maintenance file being received to a first partition 8 of a two-port storage apparatus 5. An I/O port A 61 used for the writing of data has its function restricted to additional write only by hardware or firmware provided in the storage. Therefore, even if a virus file that differs from a normal maintenance file is written, the network connection terminal 2 cannot read any of the files, such that the same effect as not being infected with a virus is achieved in the network connection terminal 2.

The data processing apparatus 1 reads the maintenance file from the first partition 8 of the two-port storage apparatus 5 through an I/O port B 71 that is independent from the I/O port A and whose function is restricted to decryption and read only using the encryption key by hardware or firmware, and updating the file of the vehicle-mounted controller. The vehicle-mounted controller starts to perform control using the new updated version of software.

Since the I/O port B 7 has a delete only function as a second function, if the maintenance file becomes unnecessary, the I/O port B 7 can delete the file using the delete only mode.

Since the code is decrypted before the data processing apparatus 1 receives the maintenance file, a correct file will be decrypted and will function normally, but an unauthorized file will be destroyed and will no longer function, and it will become meaningless data. Therefore, the data processing apparatus 1 will not be attacked.

The decryption circuit of hardware merely decrypts a code by the method designed at the time of manufacture, and a file that is not correctly encrypted will be destroyed or invalidated. Unlike software, hardware can only operate as designed, and even the most talented hacker will not be able to change its operation.

A code is safe as long as the encryption key is concealed, encrypting environment and decrypting environment exist, and algorithm is correct. In the present file transmitting and receiving system, encryption is information processing performed at the server 3 of the manufacturer, and decryption is performed by hardware that cannot be accessed by a hacker through the network 4.

This system solves the problem of not only realizing strong security but also protecting file transmission and reception by a means that clearly has no fear of being breached.

If file transmission and reception can be performed safely through the network 4, it will also be possible to transmit instruction files and operation files of the vehicle-mounted controller to the data processing apparatus 1 through the network 4, and for example, a destination of a reserved taxi by automatic vehicle operation can be instructed safely through the network 4.

Now, we will describe bidirectional data exchange. The fact that intrusion to the data processing apparatus 1 is not permitted means that real-time communication by polling and the like cannot be performed between the network connection terminal 2 and the data processing apparatus 1, and that they are offline.

However, according to the file transmitting and receiving system illustrated in FIG. 1, bidirectional data exchange through the two-port storage apparatus 5 is enabled, and log of the vehicle-mounted controller acquired by the data processing apparatus 1 can be transmitted through the network connection terminal 2 to the server 3.

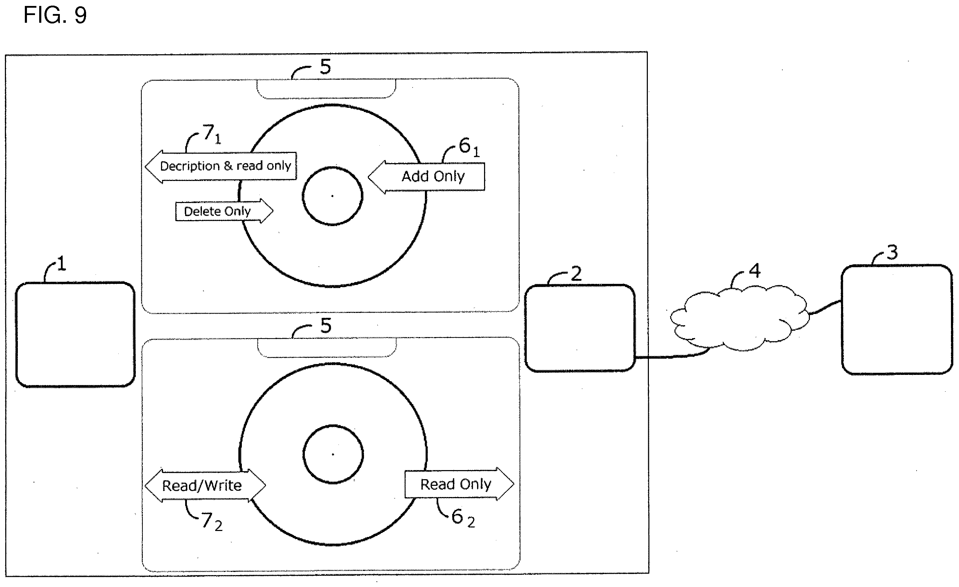

With reference to FIG. 3, the two-port storage apparatus 5 includes a second partition 9, and the data processing apparatus 1 can acquire information from the sensors and control systems of the vehicle-mounted controller, edit, encrypt and write the same through the I/O port B 72 to the second partition 9. The I/O port B 72 connected to the data processing apparatus 1 can perform read/write when accessing the second partition 9. FIG. 9 illustrates a state where the second two-port storage apparatus can realize the same functions as the second partition.

When the I/O port A 62 connected to the network connection terminal 2 accesses the second partition 9, the function thereof is restricted to read only and operated. This functional restriction is realized by hardware or firmware built into or directly connected to the storage.

The network connection terminal 2 arbitrarily monitors the second partition 9 using the I/O port A 62 of the two-port storage apparatus 5, and if a new file is added, the network connection terminal 2 transmits the new file through the network 4 to the server 3.

As described, the log of the vehicle-mounted controller and the result of execution of files such as commands, operations and updates transmitted from the server 3 can be returned to the server 3.

### (Second Embodiment)

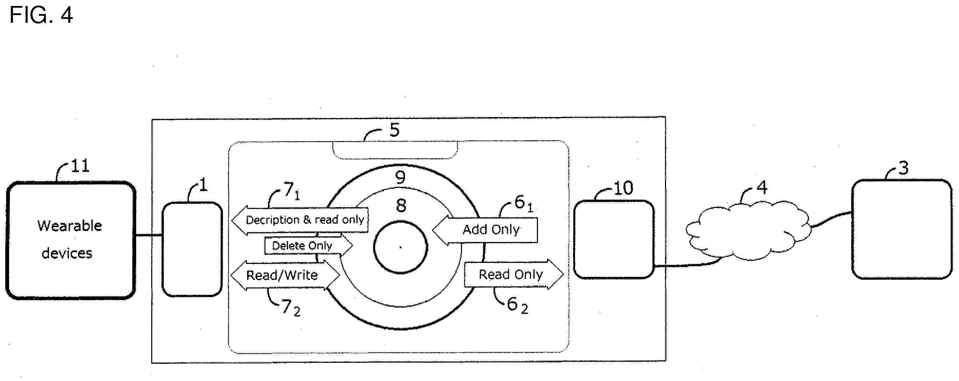

The file transmitting and receiving system illustrated in FIG. 4, where a wearable device 11 detecting blood pressure, pulse, breathing and body temperature is controlled, operated and monitored by the data processing apparatus 1 illustrated in FIG. 3, and where the network connection terminal 2 is a smartphone 10, will be described.

In order for a manufacturer of the wearable device 11 to write a maintenance file to its own product, the maintenance file is encrypted in a manner set in advance in the server 3 of the manufacturer, and the file is transmitted to the network 4, as illustrated in FIG. 2. The smartphone 10 writes the received encrypted maintenance file to the first partition 8 of the two-port storage apparatus 5. The function of the I/O port A 61 used for writing the file is restricted to additional write only. Therefore, the smartphone 10 cannot read the file being written.

The data processing apparatus 1 reads the maintenance file from the two-port storage apparatus 5 through the I/O port B 71 whose function is restricted to decryption and read only, and which is independent from the I/O port A 61, and updates the file of the wearable device 11. The wearable device 11 starts controlling and monitoring operations using the updated new version of software.

If the I/O port 7 is provided with a delete only function as a second function, the maintenance file becomes unnecessary, and the I/O port B 71 can be switched to delete only mode to delete the file.

Since the code is decrypted before the data processing apparatus 1 receives the maintenance file, a correct file will be decrypted and will function normally, but an unauthorized file will be destroyed and will no longer function, and it will become meaningless data. Therefore, the data processing apparatus 1 will not be attacked.

The decryption circuit of hardware merely decrypts a code by the method designed at the time of manufacture, and a file that is not correctly encrypted will be destroyed or invalidated. Unlike software, hardware can only operate as designed, and even the most talented hacker will not be able to change its operation.

The present system not only realizes reinforced security, but also solves the problem of realizing protection using a means that clearly has not fear of being breached.

If file update can be performed safely through the network 4, instruction files and operation files for the wearable device 11 can also be transmitted to the data processing apparatus 1 through the network 4, and instruction can be sent safely through the network 4.

The fact that intrusion to the data processing apparatus 1 is not permitted means that real-time communication by polling and the like cannot be performed between the smartphone 10 and the data processing apparatus 1. However, according to the file transmitting and receiving system illustrated in FIG. 1, bidirectional data exchange through the two-port storage apparatus 5 is enabled safely, and log of the wearable device 11 acquired by the data processing apparatus 1 can be transmitted through the smartphone 10 to the server 3.

This operation is described with reference to FIG. 3. The two-port storage apparatus 5 includes a second partition 9, wherein when the I/O port A 62 connected to the smartphone 10 accesses the second partition 9, it operates with its function restricted to read only, and when the I/O port B 72 connected to the data processing apparatus 1 accesses the second partition 9, read/write is enabled.

The data processing apparatus 1 can edit, encrypt and write the information from the wearable device 11 through the I/O port B 72 to the second partition 9. The smartphone 10 arbitrarily monitors the second partition 9 using the I/O port A 62 of the two-port storage apparatus 5, and if a new file is added, it transmits the new file through the network 4 to the server 3. As described, the log of the wearable device 11 and the result of execution of files such as commands, operations and updates transmitted from the server 3 can be returned to the server 3.

### (Third Embodiment)

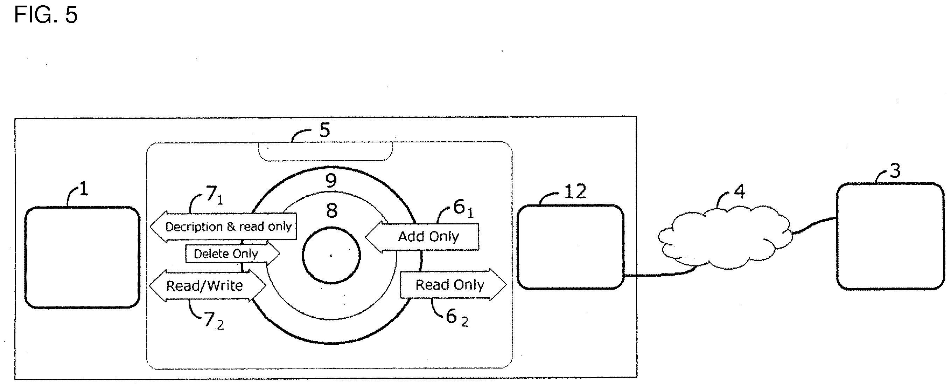

With reference to FIG. 5, an example of a case where the network connection terminal 2 is a personal computer or a smartphone will be described. In a case where the network connection terminal 2 of the file transmitting and receiving system illustrated in FIG. 1 is a personal computer or a smartphone 12, if the OS, important software and important contents of the personal computer or the smartphone 12 are stored in the second partition 9 of the two-port storage apparatus 5, the personal computer or the smartphone will not be infected with a virus or tampered by intrusion from the network 4. The stored data can be updated by a provider sharing the encryption key through use of the server 3.

According to the file transmitting and receiving system of the third embodiment, in a state where the network connection terminal 2 is a personal computer or a smartphone 12, the security of the personal computer or the smartphone 12 can be reinforced. By placing the functions related to a phone in the data processing apparatus 1, and placing personal information and address books in the first partition 8 or the storage belonging to the data processing apparatus 1, they can be concealed from the network 4.

The software and data of the first partition 8 can be updated by a provider sharing the encryption key, and if the data is transferred to the second partition 9 after decryption, it can be read by the personal computer or the smartphone 12.

Further, if a navigation function is provided to the data processing apparatus 1, and software and data are stored in the storage belonging to the data processing apparatus 1, they can be concealed from the network 4. Further, track of movement of the personal computer or the smartphone 12 can be saved in the second partition 9 in a tamper-proof manner from the network 4. This can be used to follow the track in which the personal computer or the smartphone 12 has moved.

Further, the file transmitting and receiving system according to the third embodiment can reinforce copyright protection of contents of the personal computer or the smartphone 12. If encrypted contents are written to the first partition 8 of the two-port storage apparatus 5 of the file transmitting and receiving system illustrated in FIG. 1, these contents can be viewed from the data processing apparatus 1. By adopting this system, only the encrypted contents are stored in the first partition 8 of the two-port storage apparatus 5, and plaintext contents are not stored anywhere.

### (Fourth Embodiment)

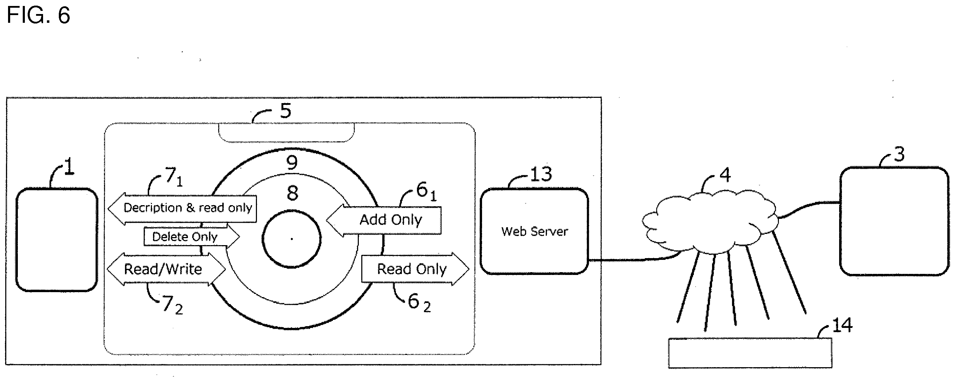

With reference to FIG. 6, a file transmitting and receiving system in which the network connection terminal 2 is a webserver 13 will be described. The file transmitting and receiving system in which the network connection terminal 2 is a webserver 13 enables to reinforce the security of the webserver 13. As described in [0043], the contents of the webserver 13 can be received safely from the server 3.

The contents can be transferred to the second partition 9 of the two-port storage apparatus 5, and made public from the webserver 13 using the I/O port A 61 of the two-port storage apparatus. This is because the contents of the second partition 9 of the two-port storage apparatus 5 will not be tampered by unauthorized intrusion from the network 4. Further, important files such as the OS of the webserver 13 can be stored in the second partition 9 of the two-port storage apparatus 5 to prevent tampering thereof.

### (Fifth Embodiment)

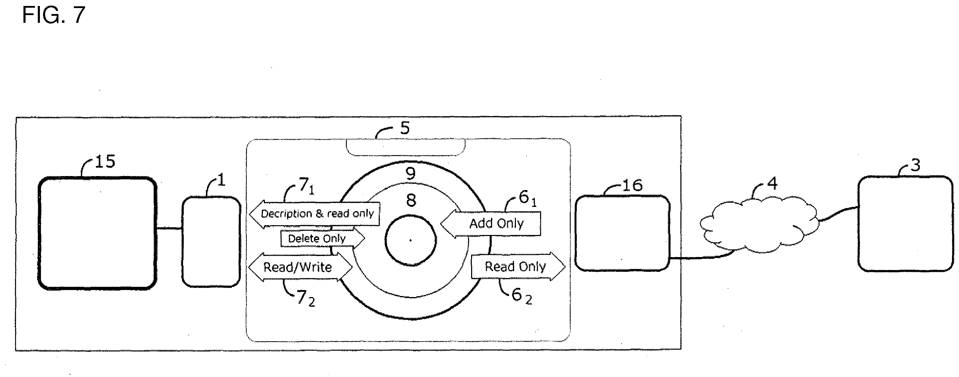

With reference to FIG. 7, a navigation system that adopts the file transmitting and receiving system of FIG. 1 will be described.

The navigation device 15 controlled by the data processing apparatus 1 of FIG. 1 performs navigation, receives update files of navigation software, update files of map information and command files through the network 4 from the server 3, and returns the acquired files such as log information as a result of execution.

A function for supporting navigation can be added to the network connection terminal 2, and the network connection terminal 2 can function as a navigation auxiliary terminal 16 capable of accessing a website that is not necessarily secure from the network 4, to utilize store information, visitor information, SNS and so on.

Even if the navigation auxiliary terminal 16 is infected with a virus, the terminal 16 can be recovered by rebooting the same.

The following describes the operation of the file transmitting and receiving system illustrated in FIG. 1.

A manufacturer of the navigation device 15 encrypts a maintenance file and a command file using its own server 3, and transmits the same to the network 4.

The network connection terminal 2 of the file transmitting and receiving system writes the received encrypted maintenance file and the encrypted command file to the first partition 8 of the two-port storage apparatus 5. Since the function of an I/O port 61 used for writing data is restricted to additional write only, the network connection terminal 2 will not be infected with a virus unless it has a readable/writable storage.

The data processing apparatus 1 reads and processes the maintenance file and the command file from the two-port storage apparatus through an I/O port 71 whose function is restricted to decryption and read only.

Since the code is decrypted before the data processing apparatus 1 receives the maintenance file, a correct file will be decrypted and will function normally, but an unauthorized file will be destroyed and will no longer function, and it will become meaningless data. Therefore, the data processing apparatus 1 will not be intruded illegally.

The data processing apparatus 1 can edit and encrypt the information from the navigation device 15 and write the information through an I/O port 72 to the second partition 9. The navigation auxiliary terminal 16 uses a read only I/O port 62 of the two-port storage apparatus 5 to monitor the second partition 9 arbitrarily, and if a new file is added, it transmits the same through the network 4 to the server 3.

The functions of the I/O port 61, the I/O port 71 and the I/O port 62 are restricted by hardware or firmware in the two-port storage apparatus.

As described, the file transmitting and receiving system illustrated in FIG. 7 realizes a strong security by a means that clearly has no fear of being breached in transmitting and receiving files through the network 4.

### (Sixth Embodiment)

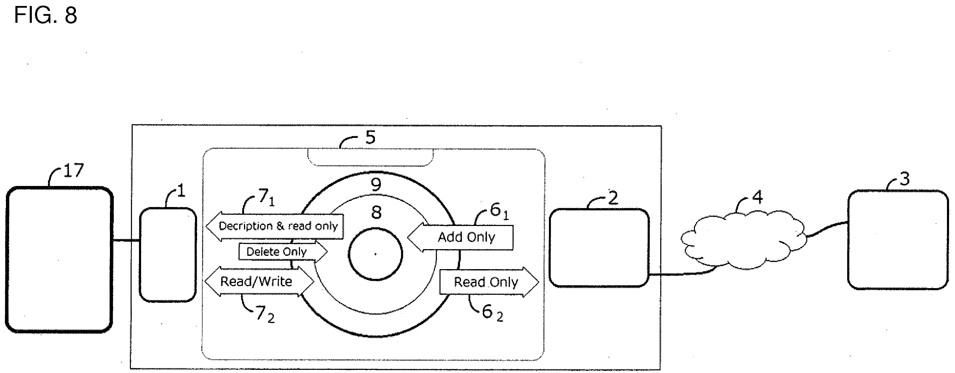

A medical device control system that adopts the file transmitting and receiving system according to FIG. 1 will be described with reference to FIG. 8.

A medical device control apparatus 17 controlled by the data processing apparatus 1 of FIG. 1 receives update files and command files of control software through the network 4 from the server 3, controls the medical device, and returns information files acquired as a result of execution of the files through the data processing apparatus 1 to the server 3.

The medical device control system can be used to control and monitor medical data of the medical device 17, such as an oxygen inhaling apparatus, at a remote location or owned by a home-treated patient.

The operation of the file transmitting and receiving system illustrated in FIG. 1 constituting the present medical device control system is similar to that described in [0071], as described below.

A manufacturer of the medical device control apparatus 17 encrypts a maintenance file and a command file using its own server 3, and transmits the same to the network 4.

The network connection terminal 2 of the file transmitting and receiving system writes the received encrypted maintenance file and the encrypted command file to the first partition 8 of the two-port storage apparatus 5. Since the function of the I/O port 61 used for writing data is restricted to additional write only, the network connection terminal 2 will not be infected with a virus unless it has a readable/writable storage.

The data processing apparatus 1 reads and processes the maintenance file and the command file from the two-port storage apparatus through the I/O port 71 whose function is restricted to decryption and read only.

Since the code is decrypted before the data processing apparatus 1 receives the maintenance file, a correct file will be decrypted and will function normally, but an unauthorized file will be destroyed and will no longer function, and it will become meaningless data. Therefore, the data processing apparatus 1 will not be intruded illegally.

The data processing apparatus 1 can edit and encrypt the information from the medical device control apparatus 17 and write the information through an I/O port 72 to the second partition 9. The network connection terminal 2 uses the read only I/O port 62 of the two-port storage apparatus 5 to monitor the second partition 9 arbitrarily, and if a new file is added, it transmits the same through the network 4 to the server 3.

The functions of the I/O port 61, the I/O port 71 and the I/O port 62 are restricted by hardware or firmware in the two-port storage apparatus.

As described, the file transmitting and receiving system illustrated in FIG. 8 realizes a strong security by a means that clearly has no fear of being breached in transmitting and receiving files through the network 4.

### (Seventh Embodiment)

An electric appliance control system for an air conditioner and the like that adopts the file transmitting and receiving system illustrated in FIG. 1 will be described with reference to FIG. 8.

An electric appliance 17 controlled and operated by the data processing apparatus 1 illustrated in FIG. 1 receives update files and command files of control software through the network 4 from the server 3, and transmits log information files obtained as a result of execution through the data processing apparatus 1 to the server 3.

It becomes possible to use a smartphone from outside the house to access the server 3 of an agent managing the electric appliance 17 and use the same to control the operation of the electric appliance.

The operation of the file transmitting and receiving system described in FIG. 1 constituting the present electronic appliance control system is similar to that described in [0071], as described below.

A manufacturer of the electric appliance 17 encrypts a maintenance file and a command file using its own server 3, and transmits the same to the network 4.

The network connection terminal 2 of the file transmitting and receiving system writes the received encrypted maintenance file and the encrypted command file to the first partition 8 of the two-port storage apparatus 5. Since the function of the I/O port 61 used for writing data is restricted to additional write only, the network connection terminal 2 will not be infected with a virus unless it has a readable/writable storage.

The data processing apparatus 1 reads and processes the maintenance file and the command file from the two-port storage apparatus through the I/O port 71 whose function is restricted to decryption and read only.

Since the code is decrypted before the data processing apparatus 1 receives the maintenance file and the command file, a correct file will be decrypted and will function normally, but an unauthorized file will be destroyed and will no longer function, and it will become meaningless data. Therefore, the data processing apparatus 1 will not be intruded illegally.

The data processing apparatus 1 can edit and encrypt the information from the electronic appliance 17 and write the information through the I/O port 72 to the second partition 9. The network connection terminal 2 uses the read only I/O port 62 of the two-port storage apparatus 5 to monitor the second partition 9 arbitrarily, and if a new file is added, it transmits the same through the network 4 to the server 3.

The functions of the I/O port 61, the I/O port 71 and the I/O port 62 are restricted by hardware or firmware in the two-port storage apparatus.

As described, the file transmitting and receiving system illustrated in FIG. 8 realizes a strong security by a means that clearly has no fear of being breached in transmitting and receiving files through the network 4.

### (Eighth Embodiment)

A home security device 17 that adopts the file transmitting and receiving system according to FIG. 1 will be described with reference to FIG. 8.

The home security device 17 controlled and operated by the data processing apparatus 1 of FIG. 1 receives update files and command files of control software through the network 4 from the server 3, and returns information files acquired as a result of execution of the files through the data processing apparatus 1 to the server 3.

It becomes possible to use a smartphone from outside the house to access the server 3 of an agent managing the home security device 17 and use the same to monitor theft, unauthorized intrusion, disaster and the like, and to perform operation such as locking.

The operation of the file transmitting and receiving system illustrated in FIG. 1 constituting the present home security device 17 is similar to that described in [0071], as described below.

A manufacturer of the home security device 17 encrypts a maintenance file and a command file using its own server 3, and transmits the same to the network 4.

The network connection terminal 2 of the file transmitting and receiving system writes the received encrypted maintenance file and the encrypted command file to the first partition 8 of the two-port storage apparatus 5. Since the function of the I/O port 61 used for writing data is restricted to additional write, the network connection terminal 2 will not be infected with a virus unless it has a readable/writable storage.

The data processing apparatus 1 reads and processes the maintenance file and the command file from the two-port storage apparatus 5 through the I/O port 71 whose function is restricted to decryption and read only.

Since the code is decrypted before the data processing apparatus 1 receives the maintenance file, a correct file will be decrypted and will function normally, but an unauthorized file will be destroyed and will no longer function, and it will become meaningless data. Therefore, the data processing apparatus 1 will not be intruded illegally.

The data processing apparatus 1 can edit and encrypt the information from the home security device 17 and write the information through the I/O port 72 to the second partition 9. The network connection terminal 2 uses a read only I/O port 62 of the two-port storage apparatus 5 to monitor the second partition 9 arbitrarily, and if a new file is added, it transmits the same through the network 4 to the server 3.

The functions of the I/O port 61, the I/O port 71 and the I/O port 62 are restricted by hardware or firmware in the two-port storage apparatus.

As described, the file transmitting and receiving system illustrated in FIG. 8 realizes a strong security by a means that clearly has no fear of being breached in transmitting and receiving files through the network 4.

### (Ninth Embodiment)

A monitoring camera device that adopts the file transmitting and receiving system according to FIG. 1 will be described with reference to FIG. 8.

A monitoring camera 17 controlled by the data processing apparatus 1 of FIG. 1 performs monitoring, receives update files and command files of control software through the network 4 from the server 3, and returns information files acquired as a result of execution of the files through the data processing apparatus 1 to the server 3.

The monitoring camera device can be applied to monitoring and operating the monitoring camera 17 at a remote location through the network 4, and "networking" of the monitoring camera can be realized in the network 4.

The operation of the file transmitting and receiving system illustrated in FIG. 1 constituting the present monitoring camera device is similar to that described in [0071], as described below.

A manufacturer of the monitoring camera 17 encrypts a maintenance file and a command file using its own server 3, and transmits the same to the network 4. The network connection terminal 2 of the file transmitting and receiving system writes the received encrypted maintenance file and the encrypted command file to the first partition 8 of the two-port storage apparatus 5. Since the function of the I/O port 61 used for writing data is restricted to additional write only, the network connection terminal 2 will not be infected with a virus unless it has a readable/writable storage.

The data processing apparatus 1 reads and processes the maintenance file and the command file from the two-port storage apparatus through the I/O port 71 whose function is restricted to decryption and read only.

Since the code is decrypted before the data processing apparatus 1 receives the maintenance file, a correct file will be decrypted and will function normally, but an unauthorized file will be destroyed and will no longer function, and it will become meaningless data. Therefore, the data processing apparatus 1 will not be intruded illegally.

The data processing apparatus 1 can edit and encrypt the information from the monitoring camera 17 and write the information through the I/O port 72 to the second partition 9. The network connection terminal 2 uses a read only I/O port 62 of the two-port storage apparatus 5 to monitor the second partition 9 arbitrarily, and if a new file is added, it transmits the same through the network 4 to the server 3.

The functions of the I/O port 61, the I/O port 71 and the I/O port 62 are restricted by hardware or firmware in the two-port storage apparatus.

As described, the file transmitting and receiving system illustrated in FIG. 8 realizes a strong security by a means that clearly has no fear of being breached in transmitting and receiving files through the network 4.

### (Tenth Embodiment)

A facility/installation control system for controlling a drainage pump during flooding and the like that adopts the file transmitting and receiving system according to FIG. 1 will be described with reference to FIG. 8.

A facility/installation control system 17 controlled and operated by the data processing apparatus 1 of FIG. 1 receives update files and command files of control software through the network 4 from the server 3, and returns information files acquired as a result of execution of the files through the data processing apparatus 1 to the server 3.

The facility/installation control system can be used to monitor and operate facilities and installations 17 at a remote location through the network 4, and also operate unmanned facilities, factories, and disaster preventing installations such as a tide embankment.

The operation of the file transmitting and receiving system illustrated in FIG. 1 constituting the present facility/installation control system is similar to that described in [0071], as described below.

A manufacturer of the facility/installation control system 17 encrypts a maintenance file and a command file using its own server 3, and transmits the same to the network 4.

The network connection terminal 2 of the file transmitting and receiving system writes the received encrypted maintenance file and the encrypted command file to the first partition 8 of the two-port storage apparatus 5. Since the function of the I/O port 61 used for writing data is restricted to additional write only, the network connection terminal 2 will not be infected with a virus unless it has a readable/writable storage.

The data processing apparatus 1 reads and processes the maintenance file and the command file from the two-port storage apparatus 5 through the I/O port 71 whose function is restricted to decryption and read only.

Since the code is decrypted before the data processing apparatus 1 receives the maintenance file and the command file, a correct file will be decrypted and will function normally, but an unauthorized file will be destroyed and will no longer function, and it will become meaningless data. Therefore, the data processing apparatus 1 will not be intruded illegally.

The data processing apparatus 1 can edit and encrypt the information from the facility/installation control system 17 and write the information through the I/O port 72 to the second partition 9. The network connection terminal 2 uses a read only I/O port 62 of the two-port storage apparatus 5 to monitor the second partition 9 arbitrarily, and if a new file is added, it transmits the same through the network 4 to the server 3.

The functions of the I/O port 61, the I/O port 71 and the I/O port 62 are restricted by hardware or firmware in the two-port storage apparatus.

As described, the file transmitting and receiving system illustrated in FIG. 8 realizes a strong security by a means that clearly has no fear of being breached in transmitting and receiving files through the network 4.

### (Eleventh Embodiment)

A drone control system that adopts the file transmitting and receiving system according to FIG. 1 will be described with reference to FIG. 8.

A drone 17 controlled and operated by the data processing apparatus 1 of FIG. 1 receives update files and command files of control software through the network 4 from the server 3, and returns information files acquired as a result of execution of the files through the data processing apparatus 1 to the server 3.

The drone control system can be used to monitor and operate the drone 17 at a remote location through the network 4.

The operation of the file transmitting and receiving system illustrated in FIG. 1 constituting the present drone control system is similar to that described in [0071], as described below.

A manufacturer of the drone 17 encrypts a maintenance file and a command file using its own server 3, and transmits the same to the network 4.

The network connection terminal 2 of the file transmitting and receiving system writes the received encrypted maintenance file and the encrypted command file to the first partition 8 of the two-port storage apparatus 5. Since the function of the I/O port 61 used for writing data is restricted to additional write only, the network connection terminal 2 will not be infected with a virus unless it has a readable/writable storage.

The data processing apparatus 1 reads and processes the maintenance file and the command file from the two-port storage apparatus 5 through the I/O port 71 whose function is restricted to decryption and read only.

Since the code is decrypted before the data processing apparatus 1 receives the maintenance file and the command file, a correct file will be decrypted and will function normally, but an unauthorized file will be destroyed and will no longer function, and it will become meaningless data. Therefore, the data processing apparatus 1 will not be intruded illegally.

The data processing apparatus 1 can edit and encrypt the information from the drone 17 and write the information through the I/O port 72 to the second partition 9. The network connection terminal 2 uses a read only I/O port 62 of the two-port storage apparatus 5 to monitor the second partition 9 arbitrarily, and if a new file is added, it transmits the same through the network 4 to the server 3.

The functions of the I/O port 61, the I/O port 71 and the I/O port 62 are restricted by hardware or firmware in the two-port storage apparatus.

As described, the file transmitting and receiving system illustrated in FIG. 8 realizes a strong security by a means that clearly has no fear of being breached in transmitting and receiving files through the network 4.

### Reference Signs List

1 Data processing apparatus
2 Network connection terminal
3 Server
4 Network
5 Two-port storage apparatus
61 I/O port A: additional write only (or additional write after description only)
62 I/O port A: read only
71 I/O port B: decryption, read and delete only (or read/write)
72 I/O port B: read/write
8 First partition
9 Second partition
10 Smartphone
11 Wearable device
12 Personal computer, smartphone
13 Webserver
14 Reader
15 Navigation device (GPS, map)
16 Navigation auxiliary terminal
17 IoT device (medical device control, electric appliance control, home security, monitoring camera control, facility/installation control, drone)

## Claims

1. A file transmitting and receiving system comprising:
a server configured to transmit to a network an encrypted file in which a data to be transmitted is encrypted;
a network configured to transmit the encrypted file;
a network connection terminal configured to receive the encrypted file from the network;
a data processing apparatus configured to use the encrypted file being decrypted; and
a two-port storage apparatus configured to relay the network connection terminal and the data processing apparatus, wherein a first I/O port A of the two-port storage apparatus is connected to the network connection terminal,
a second I/O port B is connected to the data processing apparatus,
the I/O port A operates with a functional restriction restricting the function of the I/O port A to only add data from the network connection terminal to the two-port storage apparatus;
the I/O port B operates with a functional restriction restricting the function of the I/O port B to two functions, which are "read and decryption only" in which the I/O port B reads the data from the two-port storage apparatus, decrypts the encrypted file and transfers the file to the data processing apparatus, and "deletion of file" in which the I/O port B deletes unnecessary files, and
the functional restriction is realized by hardware or firmware built into or coupled directly to the two-port storage apparatus.

2. The file transmitting and receiving system according to claim 1,
wherein the add only function of the I/O port A is set as a "decryption and add only function" in which the I/O port does not perform operations other than decrypting a code after receiving data from the network connection terminal, and adding the decrypted data to the two-port storage apparatus after decrypting the code,
the decrypting function of the I/O port B is set as a simple read/write function, and
the functional restriction is realized by hardware or firmware built into or coupled directly to the two-port storage apparatus.

3. The file transmitting and receiving system according to claim 1 or claim 2,
wherein the file transmitting and receiving system further comprises a second two-port storage apparatus or a second partition in the two-port storage apparatus,
wherein if the system comprises the second two-port storage apparatus,
in a state where access is performed from the network connection terminal to the second two-port storage apparatus using a second I/O port A attached thereto, the second I/O port A operates with a functional restriction restricting the function thereof to read only,
in a state where access is performed from the data processing apparatus to the second two-port storage apparatus using a second I/O port B attached thereto, the second I/O port B performs a read/write operation,
if the system comprises the second partition in the two-port storage apparatus,
in a state where access is performed from the network connection terminal to the second partition of the two-port storage apparatus using the I/O port A, the I/O port A operates with a functional restriction restricting the function thereof to read only,
in a state where access is performed from the data processing apparatus to the second partition of the two-port storage apparatus using the I/O port B, the I/O port B performs a read/write operation, and the functional restriction is realized by hardware or firmware built into or coupled directly to the two-port storage apparatus.

4. The file transmitting and receiving system according to claim 3,
wherein the network connection terminal is a smartphone.

5. The file transmitting and receiving system according to claim 3,
wherein the network connection terminal is a personal computer.

6. The file transmitting and receiving system according to claim 3,
wherein the network connection terminal is a webserver.
